(19) Europäisches Patentamt
European Patent Office
Office européen des brevets

(11) **EP 2 426 037 B1**

(12) **EUROPEAN PATENT SPECIFICATION**

(45) Date of publication and mention
of the grant of the patent:
**29.10.2014 Bulletin 2014/44**

(21) Application number: **11177948.4**

(22) Date of filing: **18.08.2011**

(51) Int Cl.:
**B62D 57/032** (2006.01)

(54) **Walking robot and control method thereof**

Schreitroboter und Steuerverfahren dafür

Robot marchant et son procédé de commande

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.09.2010 KR 20100086787**

(43) Date of publication of application:
**07.03.2012 Bulletin 2012/10**

(73) Proprietor: **Samsung Electronics Co., Ltd.
Suwon-si, Gyeonggi-do, 443-742 (KR)**

(72) Inventors:
• **Lee, Min Hyung**
**Gyeonggi-do (KR)**
• **Roh, Kyung Shik**
**Gyeonggi-do (KR)**
• **Kwon, Woong**
**Gyeonggi-do (KR)**

(74) Representative: **D'Halleweyn, Nele Veerle Trees
Gertrudis
Arnold & Siedsma
Bezuidenhoutseweg 57
2594 AC The Hague (NL)**

(56) References cited:
**EP-A1- 1 642 687     EP-A1- 1 733 852**

**Description**

BACKGROUND

1. Field

Embodiments relate to a torque-based walking robot and a control method thereof in which walking of the robot is stably controlled.

2. Description of the Related Art

Recently, research and development of walking robots which have a similar joint system to that of humans and are designed to coexist with humans in human working and living spaces has been vigorously progressing. Such walking robots include multi-leg walking robots having a plurality of legs, such as bipedal or tripedal walking robots, and in order to achieve stable walking of the robots, actuators, such as electric actuators and hydraulic actuators, located at respective joints need to be driven. Driving of actuators is generally divided into a position-based Zero Moment Point (ZMP) control method in which command angles, i.e., command positions, of respective joints are given and the joints are controlled so as to trace the command angles, and a torque-based Finite State Machine (FSM) control method in which command torques of respective joints are given and the joints are controlled so as to trace the command torques.

In the ZMP control method, a walking direction, a walking stride, and a walking velocity of a robot are set in advance so as to satisfy a ZMP constraint, i.e., a condition that a ZMP is present in a safety region within a support polygon formed by (a) supporting leg(s) (if the robot is supported by one leg, this means the region of the leg, and if the robot is supported by two legs, this means a region set to have a small area within a convex polygon including the regions of the two legs in consideration of safety), walking patterns of the respective legs corresponding to the set factors are created, and walking trajectories of the respective legs are calculated based on the walking patterns. Further, angles of joints of the respective legs are calculated through inverse kinematic calculation of the calculated walking trajectories, and target control values of the respective joints are calculated based on current angles and target angles of the respective joints. Further, servo control in which the respective legs trace the calculated walking trajectories per control time is achieved. That is, during walking, whether or not positions of the respective legs precisely trace the walking trajectories according to the walking patterns is detected, and if some legs deviate from the walking trajectories, torques of actuators are adjusted so that the respective legs precisely trace the walking trajectories.

Such a ZMP control method is a position-based control method and thus achieves precise position control, but requires precise angle control of the respective joints in order to control the ZMP and thus requires a high servo gain. Thereby, the ZMP control method requires high current and has low energy efficiency and high rigidity of the joints, thus causing heavy impact to surrounding environments. Further, in order to calculate angles of the respective joints, the ZMP control method needs to avoid kinematic singularities, and thus the robot walks with bent knees and has an unnatural gait different from that of a human. Such robot is known from EP1642687.

On the other hand, in the FSM control method, instead of tracing positions per control time, the finite number of operating states of a robot is defined in advance, target torques of respective joints are calculated with reference to the respective operating states during walking, and the joints are controlled so as to trace the target torques. Such an FSM control method controls torques of the respective joints during walking and thus enables a low servo gain, thereby having high energy efficiency and low rigidity, and thus enabling safe surrounding environments. Further, the FSM control method does not need to avoid kinematic singularities, thereby allowing the robot to have a more natural gait with knees extended straight similar to that of a human.

However, since the FSM control method controls walking of the robot based on the finite number of the operating states, defined in advance, if walking of the robot is improperly controlled, the robot may lose balance. Therefore, a separate balancing motion to keep the robot balanced is performed regardless of the walking motion of the robot. In order to perform the balancing motion of the robot, a command torque to achieve stable balance needs to be calculated, and in order to calculate the command torque, a very complicated dynamic equation needs to be solved. Accordingly, the FSM control method has not been successively implemented in a robot with legs having a joint structure of six degrees of freedom up to now.

SUMMARY

Therefore, it is an aspect of one or more embodiments to provide a walking robot and a control method thereof in which target trajectories during stable walking of the robot are generated and control torques are calculated so as to trace the target trajectories.

It is another aspect of one or more embodiments to provide a walking robot and a control method thereof in which, when a command to transition a walking motion into another walking motion is input by a user, control torques are calculated so as to trace target trajectories of the latter walking motion.

Additional aspects of one or more embodiments will be set forth in part in the description which follows and, in part, will be obvious from the description, or may be learned by practice of embodiments.

In accordance with an aspect of one or more embodiments, a walking robot includes at least one joint unit provided on each leg of the robot, a sensing unit to sense angle and angular velocity of the at least one joint unit, a memory unit to store data of the angle and angular velocity of the at least one joint unit during stable walking, a target trajectory generation unit to generate a target trajectory using the data of the angle and angular velocity stored in the memory unit, a control torque calculation unit to check stability of the at least one joint unit by comparing the sensed angle and angular velocity of the at least one joint unit with the target trajectory, and, if an unstable joint unit is present, to calculate a control torque of the unstable joint unit to trace the target trajectory, and a servo control unit to transmit the calculated control torque to the unstable joint unit so as to control walking of the robot.

The control torque calculation unit may check the stability of the at least one joint unit based on whether or not the sensed angle and angular velocity fall within the target trajectory.

The control torque calculation unit may calculate control angle and angular velocity of the unstable joint unit to trace the target trajectory, and calculate the control torque using the calculated control angle and angular velocity.

The at least one joint unit may include a hip joint unit, a knee joint unit, and an ankle joint unit to move a thigh of each leg of the robot, and the target trajectory generation unit may generate target trajectories of the hip joint unit, the knee joint unit, and the ankle joint unit of each leg.

In accordance with another aspect of one or more embodiments, a control method of a walking robot, which has at least one joint unit provided on each leg of the robot, a sensing unit to sense angle and angular velocity of the at least one joint unit, and a memory unit to store data of the angle and angular velocity of the at least one joint unit during stable walking, includes generating a target trajectory using the data of the angle and angular velocity stored in the memory unit, checking stability of the at least one joint unit by comparing the sensed angle and angular velocity of the at least one joint unit with the target trajectory, if an unstable joint unit is present as a result of the checking of the stability of the at least one joint unit, calculating a control torque of the unstable joint unit to trace the target trajectory, and transmitting the calculated control torque to the unstable joint unit so as to control walking of the robot.

The stability of the at least one joint unit may be checked based on whether or not the sensed angle and angular velocity fall within the target trajectory.

The calculation of the control torque may include calculating control angle and angular velocity to trace the target trajectory by comparing the sensed angle and angular velocity with the target trajectory, and calculating the control torque using the calculated control angle and angular velocity.

The at least one joint unit may include a hip joint unit, a knee joint unit, and an ankle joint unit to move a thigh of each leg of the robot, and the target trajectory of each of the hip joint unit, the knee joint unit, and the ankle joint unit of each leg may be generated.

In accordance with another aspect of one or more embodiments, a walking robot includes a user interface unit through which a user inputs a robot walking transition command to transition from a first walking motion to a second walking motion, at least one joint unit provided on each leg of the robot, a sensing unit to sense angle and angular velocity of the at least one joint unit, a memory unit to store data of the angle and angular velocity of the at least one joint unit in the first walking motion and the second walking motion, a target trajectory generation unit to generate target trajectories using the data of the angle and angular velocity in the first walking motion and the second walking motion, stored in the memory unit, a control torque calculation unit to calculate a control torque to trace the target trajectory in the second walking motion from the target trajectory in the first walking motion, if the robot walking transition command is input by the user, and a servo control unit to transmit the calculated control torque to the at least one joint unit so as to control the walking of the robot.

The control torque calculation unit may calculate the control torque until the sensed angle and angular velocity of the at least one joint unit fall within the target trajectory in the second walking motion.

The control torque calculation unit may calculate control angle and angular velocity of the at least one joint unit by comparing the sensed angle and angular velocity of the at least one joint unit with the target trajectory in the second walking motion, and calculate the control torque using the calculated control angle and angular velocity.

In accordance with a further aspect of one or more embodiments, a control method of a walking robot, which has a user interface unit through which a user inputs a robot walking transition command to transition from a first walking motion to a second walking motion, at least one joint unit provided on each leg of the robot, a sensing unit to sense angle and angular velocity of the at least one joint unit, and a memory unit to store data of the angle and angular velocity of the at least one joint unit in the first walking motion and the second walking motion, includes generating target trajectories using the data of the angle and angular velocity in the first walking motion and the second walking motion, stored in the memory unit, calculating a control torque to trace the target trajectory in the second walking motion from the target trajectory in the first walking motion, if the robot walking transition command is input by the user, and transmitting the calculated control torque to the at least one joint unit so as to control the walking of the robot.

The control torque may be calculated until the sensed angle and angular velocity of the at least one joint unit fall within the target trajectory in the second walking motion.

The calculation of the control torque may include calculating control angle and angular velocity of the at least one joint unit by comparing the sensed angle and angular velocity of the at least one joint unit with the target trajectory in the second walking motion, and calculating the control torque using the calculated control angle and angular velocity.

BRIEF DESCRIPTION OF THE DRAWINGS

These and/or other aspects of the embodiments will become apparent and more readily appreciated from the following description of the embodiments, taken in conjunction with the accompanying drawings of which:

FIG. 1 is a view illustrating an external appearance of a robot in accordance with an embodiment;

FIG. 2 is a view illustrating structures of main joints of the robot of FIG. 1;

FIG. 3 is a view illustrating operating states of the robot and control actions of the respective operating states, while the robot in accordance with an embodiment walks based on an FSM;

FIG. 4 is a walking control block diagram of the robot in accordance with an embodiment;

FIG. 5A is a view illustrating measurement of a rotation angle of a hip joint unit;

FIG. 5B is a view illustrating measurement of a rotation angle of a knee joint unit;

FIG. 5C is a view illustrating measurement of a rotation angle of an ankle joint unit;

FIG. 6 is a flow chart illustrating a walking control method of a robot in accordance with an embodiment;

FIG. 7 is a graph illustrating tracing of a walking trajectory based on the walking control method of the robot of FIG. 6;

FIG. 8 is a flow chart illustrating a walking control method of a robot in accordance with another embodiment; and

FIG. 9 is a graph illustrating generation of a transition motion based on the walking control method of the robot FIG. 8.

DETAILED DESCRIPTION

Reference will now be made in detail to embodiments, examples of which are illustrated in the accompanying drawings, wherein like reference numerals refer to like elements throughout.

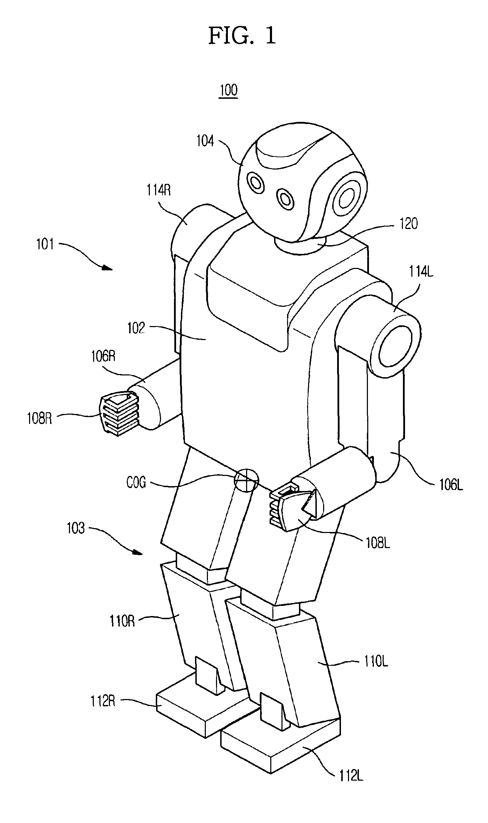

FIG. 1 is a view illustrating an external appearance of a robot in accordance with an embodiment.
As shown in FIG. 1, a robot 100 in accordance with an embodiment is a bipedal walking robot, which walks upright using two legs 110 in the same manner as a human, and includes an upper body 101 including a torso 102, a head 104, and arms 106, and a lower body 103 including the two legs 110.
The upper body 101 of the robot 100 includes the torso 102, the head 104 connected to the upper portion of the torso 102 through a neck 120, the two arms 106L and 106R connected to both sides of the upper portion of the torso 102 through shoulders 114L and 114R, and hands 108L and 108R respectively connected to tips of the two arms 106L and 106R.
The lower body 103 of the robot 100 includes the two legs 110L and 110R connected to both sides of the lower portion of the torso 102 of the upper body 101, and feet 112L and 112R respectively connected to tips of the two legs 110L and 110R
Here, "R" and "L" respectively indicate the right and left sides of the robot 100, and COG indicates the center of gravity of the robot 100.

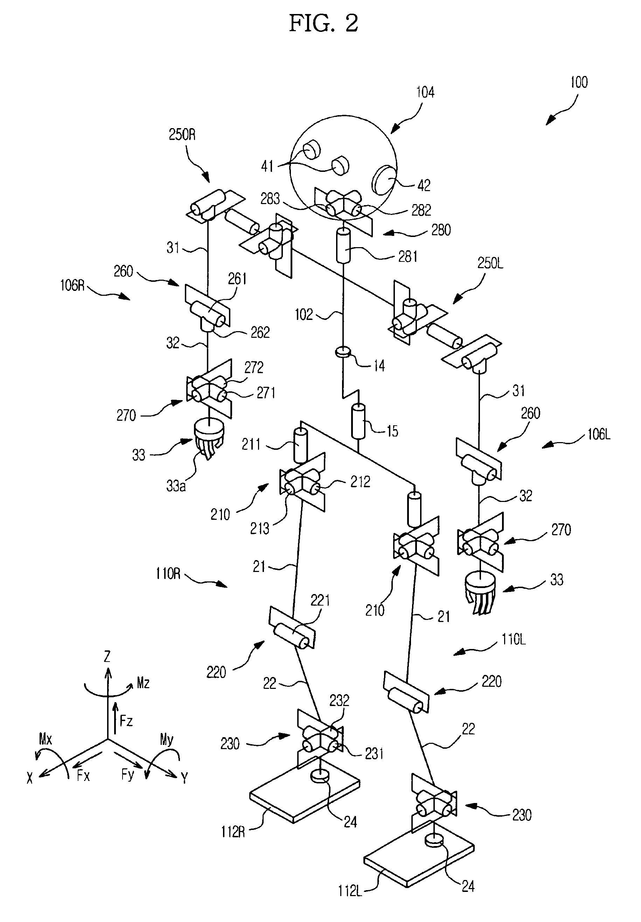

FIG. 2 is a view illustrating structures of main joints of the robot of FIG. 1.
As shown in FIG. 2, a pose sensor 14 is installed on the torso 102 of the robot 100. The pose sensor 14 detects a tilt angle of the upper body 101, i.e., an inclination of the upper body 101 with respect to a vertical axis, and an angular velocity thereof, and then generates pose data. The pose sensor 14 may be installed on the two legs 110L and 110R as well as the torso 102.
A waist joint unit 15 having 1 degree of freedom in the yaw direction so as to rotate the torso 101 is installed on the torso 102.
Further, cameras 41 to capture surrounding images and microphones 42 to input user's voice are installed on the head 104 of the robot 100.
The head 104 is connected to the torso 102 of the upper body 101 through a neck joint unit 280. The neck joint unit 280 includes a rotary joint 281 in the yaw direction (rotated around the Z-axis), a rotary joint 282 in the pitch direction (rotated around the Y axis), and a rotary joint 283 in the roll direction (rotated around the X-axis), and thus has 3 degrees of freedom.
Motors (for example, actuators, such as electric motors or hydraulic motors) to rotate the head 104 are connected to the respective rotary joints 281, 282, and 283 of the neck joint unit 280.
The two arms 106L and 106R of the robot 100 respectively have upper arm links 31, lower arm links 32, and the hands 108L and 108R.
The upper arm links 31 are connected to the upper body 101 through shoulder joint units 250L and 250R, the upper arm links 31 and the lower arm links 32 are connected to each other through elbow joint units 260, and the lower arm links 32 and the hands 108L and 108R are connected to each other by wrist joint units 270.

The shoulder joint units 250L and 250R are installed at both sides of the torso 102 of the upper body 101, and connect the two arms 1 06L and 1 06R to the torso 102 of the upper body 101.

Each elbow joint unit 260 has a rotary joint 261 in the pitch direction and a rotary joint 262 in the yaw direction, and thus has 2 degrees of freedom.

Each wrist joint unit 270 has a rotary joint 271 in the pitch direction and a rotary joint 272 in the roll direction, and thus has 2 degrees of freedom.

Each hand 108L or 108R is provided with five fingers 33a. A plurality of joints (not shown) driven by motors may be installed on the respective fingers 33a. The fingers 33a perform various motions, such as gripping of an article or pointing in a specific direction, in connection with movement of the arms 106.

The two legs 110L and 110R respectively have thigh links 21, calf links 22, and the feet 112L and 112R.

The thigh links 21 correspond to thighs of a human and are connected to the torso 102 of the upper body 101 through hip joint units 210, the thigh links 21 and the calf links 22 are connected to each other by knee joint units 220, and the calf links 22 and the feet 112L and 112R are connected to each other by ankle joint units 230.

Each hip joint unit 210 has a rotary joint (hip yaw joint) 211 in the yaw direction (rotated around the Z-axis), a rotary joint (hip pitch joint) 212 in the pitch direction (rotated around the Y-axis), and a rotary joint (hip roll joint) 213 in the roll direction (rotated around the X-axis), and thus has 3 degrees of freedom.

Each knee joint unit 220 has a rotary joint 221 in the pitch direction, and thus has 1 degree of freedom.

Each ankle joint unit 230 has a rotary joint 231 in the pitch direction and a rotary joint 232 in the roll direction, and thus has 2 degrees of freedom.

Since six rotary joints of the hip joint unit 210, the knee joint unit 220, and the ankle joint unit 230 are provided on each of the two legs 110L and 110R, a total of twelve rotary joints is provided to the two legs 110L and 11 0R

Further, multi-axis force and torque (F/T) sensors 24 are respectively installed between the feet 112L and 112R and the ankle joint units 230 of the two legs 110L and 110R. The multi-axis F/T sensors 24 measure three-directional components Fx, Fy, and Fz of force and three-directional components Mx, My, and Mz of moment transmitted from the feet 112L and 112R, thereby detecting whether or not the feet 112L and 112R touch the ground and load applied to the feet 112L and 112R.

Although not shown in the drawings, actuators, such as motors, to drive the respective rotary joints are installed on the robot 100. A walking control unit to control the overall operation of the robot 100 properly controls the motors, thereby allowing the robot 100 to achieve various actions.

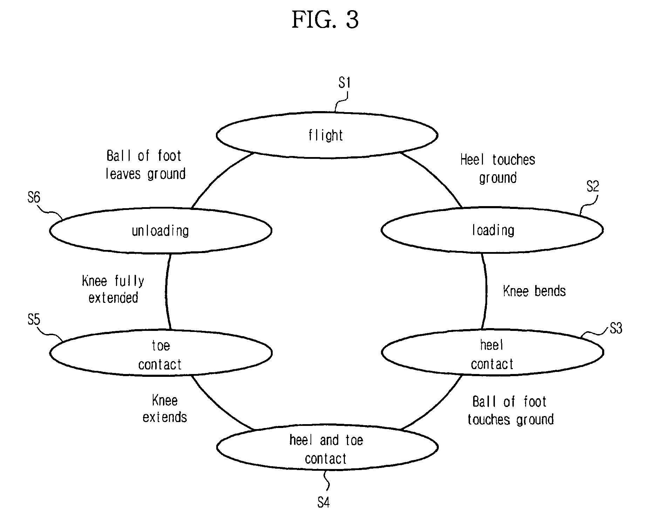

FIG. 3 is a view illustrating operating states of the robot and control actions of the respective operating states, while the robot in accordance with an embodiment walks based on an FSM.

With reference to FIG. 3, in the torque-based FSM control method, operation of the robot 100 is divided into a plurality of operating states (for example, 6 states of S1, S2, S3, S4, S5, and S6), which are defined in advance. The respective operating states S1, S2, S3, S4, S5, and S6 indicate poses of one leg 110L or 110R of the robot 100 during walking, and stable walking of the robot 100 is achieved by proper transition between such poses of the robot 100.

Further, one walking motion is achieved through these operating states S1, S2, S3, S4, S5, and S6 and transitions between such operating states S1, S2, S3, S4, S5, and S6.

The first operating state (flight state) S1 corresponds to a pose of swinging the leg 110L or 110R, the second operating state (loading state) S2 corresponds to a pose of loading the foot 112 on the ground, the third operating state (heel contact state) S3 corresponds to a pose of bringing the heel of the foot 112 into contact with the ground, the fourth operating state (heel and toe contact state) S4 corresponds to a pose of bringing both the heel and the toe of the foot 112 into contact with the ground, the fifth operating state (toe contact state) S5 corresponds to a pose of bringing the toe of the foot 112 into contact with the ground, and the sixth operating state (unloading state) S6 corresponds to a pose of unloading the foot 112 from the ground.

In order to transition from one operating state to another operating state, a control action to achieve the transition is required.

In more detail, if the first operating state S1 transitions to the second operating state S2 (S1 →S2), a control action in which the heel of the foot 112 touches the ground is required.

If the second operating state S2 transitions to the third operating state S3 (S2→S3), a control action in which the knee (particularly, the knee joint unit) of the foot 112 touching the ground bends is required.

If the third operating state S3 transitions to the fourth operating state S4 (S3→ S4), a control action in which the toe of the foot 112 touches the ground is required.

If the fourth operating state S4 transitions to the fifth operating state S5 (S4→ S5), a control action in which the knee of the foot 112 touching the ground extends is required.

If the fifth operating state S5 transitions to the sixth operating state S6 (S4→ S5), a control action in which the knee of the foot 112 touching the ground fully extends is required.

If the sixth operating state S6 transitions to the first operating state S1 (S6→ S1), a control action in which the toe of the foot 112 leaves the ground is required.

Therefore, in order to perform the control actions, the robot 100 calculates torque commands of the respective joints corresponding to the respective control actions, and outputs the calculated torque commands to the actuators, such as the motors, installed on the respective joints to drive the actuators.

In such a torque-based FSM control method, walking of the robot 100 is controlled depending on the defined operating states S1, S2, S3, S4, S5, and S6, defined in advance. However, walking of the robot 100 is not properly controlled simply through the transitions between the operating states S1, S2, S3, S4, S5, and S6, and thus the robot 100 may lose balance.

Therefore, in the torque-based FSM control method in accordance with an embodiment, target trajectories during stable walking of the robot 100 are generated and control torques are calculated so as to trace the target trajectories. Further, the calculated control torques are output to the actuators, such as the motors installed on the respective joint units, thereby allowing the robot 100 to stably and naturally walk while maintaining balance.

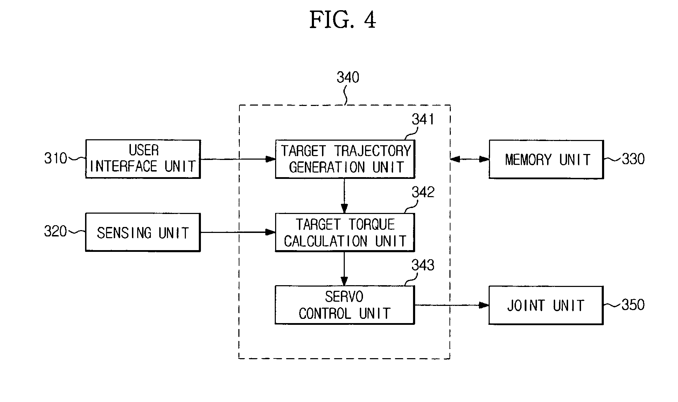

FIG. 4 is a walking control block diagram of the robot in accordance with an embodiment. The robot in accordance with the embodiment includes a user interface unit 310, a sensing unit 320, a memory unit 330, a walking control unit 340, and joint units 350.

The user interface unit 310 is used to input a user command to instruct the robot to walk.

The sensing unit 320 includes pose sensors installed on the torso of the robot to detect inclinations or poses of the upper body and the two legs, and the F/T sensors installed between the feet and the ankle joint units of the robot to detect whether or not the feet contact the ground.

Particularly, in this embodiment, the sensing unit 320 measures angles and angular velocities of the respective joint units 350. The sensing unit 320 measures angles and angular velocities of hip joint units, knee joint units, and ankle joint units in order to control walking of the robot.

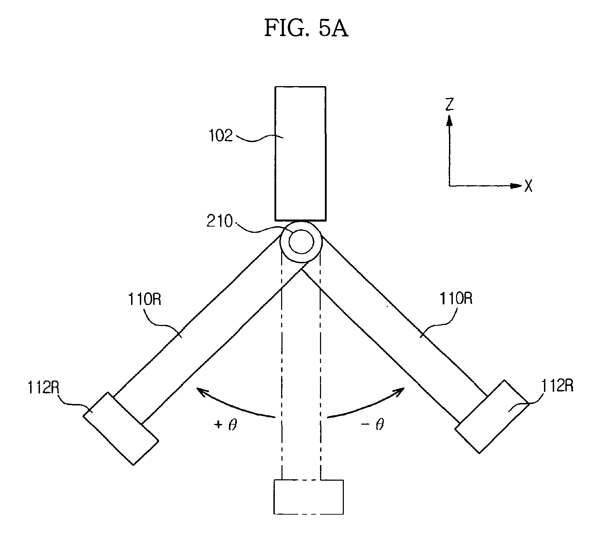

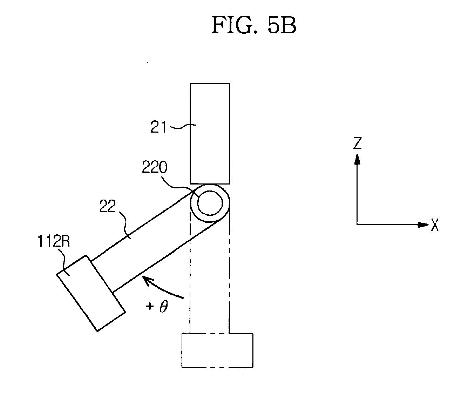

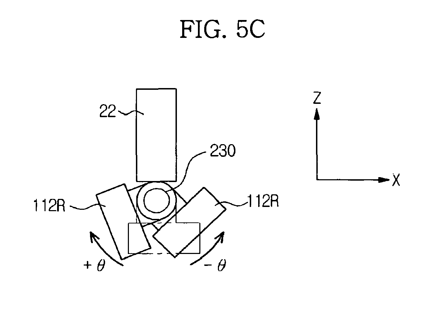

FIGS. 5A, 5B and 5C illustrate methods of measuring rotation angles of the respective joint units 350.

FIGS. 5A, 5B and 5C are views illustrating measurement of rotation angles of the hip joint unit, the knee joint unit, and the ankle joint unit, as seen from the side part of the robot. As shown in FIGS. 5A, 5B and 5C, the rotation angles of respective joints in the pitch direction with respect to the vertical axis are measured, and the rotation angle of the knee joint unit is present only in the direction of +θ.

The memory unit 330 stores operating state data of the robot legs based on a Finite State Machine (FSM) and angle and angular velocity data of the respective joint units corresponding to the operating states of the robot legs during stable walking of the robot.

Here, the FSM sequentially represents transitions of the finite number of the operating states of the torso and the legs. The finite number of the operating states of the legs is determined according to the angles and angular velocities of the respective joint units 350. That is, the memory unit 330 stores angle and angular velocity data of the hip joint units, the knee joint units, and the ankle joint units when stable walking of the robot is achieved.

Further, the memory unit 330 sets different types of walking motions, and stores angle and angular velocity data of the hip joint units, the knee joint units, and the ankle joint units in the individual motions when stable walking of the robot is achieved.

Types of walking motions are set to be different based on walking velocities and walking strides. For example, a walking motion having a walking stride of 10 cm is set to a first walking motion, and a walking motion having a walking stride of 20 cm is set to a second walking motion.

The walking control unit 340 is a Proportional-Derivative (PD) controller to control walking of the robot based on a walking command input through the user interface unit 310 and sensor data sensed by the sensing unit 320, and includes a target trajectory generation unit 341, a control torque calculation unit 342, and a servo control unit 343.

The target trajectory generation unit 341 generates target trajectories using the angles and angular velocities of the respective joint units 350 during stable walking of the robot stored in the memory unit 330. The target trajectory is a finite circulation trajectory formed in a curve by connecting a variation of angular velocities of each joint unit 350 according to angles of each joint unit 350 during stable walking of the robot.

The target trajectory generation unit 341 generates target trajectories of the hip joint units, the knee joint units, and the ankle joint units. That is, the target trajectory generation unit 341 generates the target trajectories of the right and left hip joint units, the right and left knee joint units, and the right and left ankle joint units, thereby generating a total of six target trajectories.

Further, when a walking motion transition command (e.g. a command to transition from the first walking motion to the second walking motion) is input through the user interface unit 310, the target trajectory generation unit 341 generates target trajectories of the respective joint units 350 during the first walking motion and the second walking motion, respectively. For example, when a command to transition from the first walking motion having the walking stride of 10 cm to the second walking motion having the walking stride of 20 cm is input through the user interface unit 310, the target trajectory generation unit 341 generates the target trajectories using the angles and angular velocities of the respective joint units 350 during the first walking motion and the second walking motion, stored in the memory unit 330. That is, the target trajectories of the hip joint units, the knee joint units, and the ankle joint units during the first walking motion and the second walking motion are respectively generated.

The control torque calculation unit 342 calculates control torques to trace the target trajectories of the respective joint units 350 generated by the target trajectory generation unit 341.

In more detail, the control torque calculation unit 342 checks stability of the respective joint units 350 by comparing sensed angles and angular velocities of the respective joint units 350 with the target trajectories, and calculates control angles and angular velocities of unstable joint units 350. Further, the control torque calculation unit 342 calculates control torques using the calculated control angles and angular velocities. Such calculation of the control torques is carried out per control cycle, and the control cycle is set to 1 ms.

When a walking motion transition command is input by a user, the control torque calculation unit 342 calculates control torques to generate a transition motion. Thereby, stable transition between walking motions is achieved.

In more detail, when a walking motion transition command (e.g. a command to transition from the first walking motion to the second walking motion) is input through the user interface unit 310, the control torque calculation unit 342 calculates control torques of the respective joint units 350 so as to trace the target trajectories in the second walking motion from the target trajectories in the first walking motion.

Such calculation of the control torques using the angles and angular velocities of the respective joint units enables the robot to maintain balance and to achieve natural motion transitions without performing complicated calculation.

The servo control unit 343 supplies the control torques calculated by the control torque calculation unit 342 to the joint units 350 of the legs, and outputs torque control signals corresponding to the calculated control torques to the joint units 350 so as to drive actuators, such as motors installed on the joint units 350.

Therefore, the joint units 350 receive the torque control signals input by the servo control unit 343 and then drive the actuators, such as the motors installed on the joint units 350, thereby enabling the robot to achieve stable walking along the target trajectories of the joint units 350 while maintaining balance.

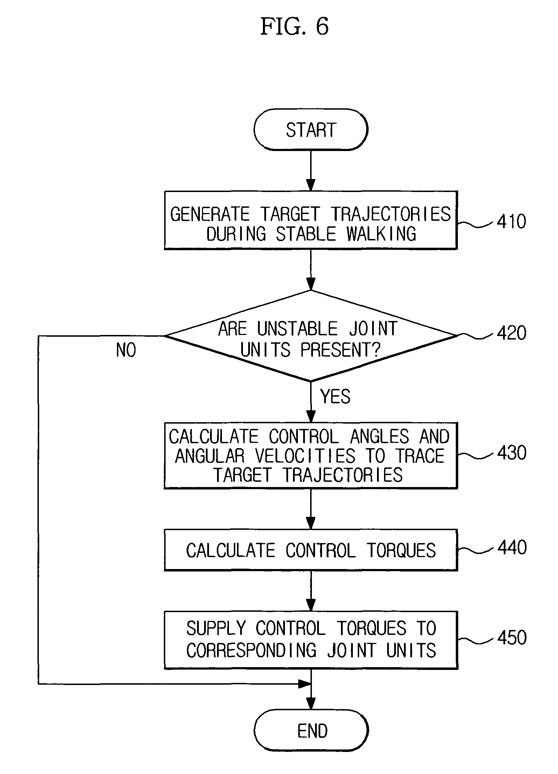

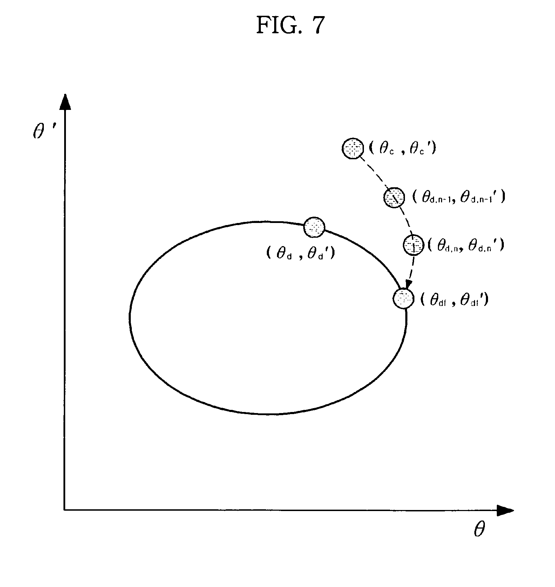

FIG. 6 is a flow chart illustrating a walking control method of a robot in accordance with an embodiment, and FIG. 7 is a graph illustrating tracing of a walking trajectory based on the walking control method of the robot of FIG. 6.

First, when a user command to instruct the robot to walk is input through the user interface unit, the target trajectory generation unit generates target trajectories using angles and angular velocities of respective joint units during stable walking of the robot (operation 410). The angles and angular velocities of respective joint units during stable walking of the robot are obtained through experimentation.

The target trajectory is a curve obtained by connecting a variation of angular velocities of each joint unit according to angles of each joint unit based on transitions between operating states of the legs. That is, target trajectories of hip joint units, knee joint units, and ankle joint units are respectively generated.

When the target trajectories are generated (operation 410), the control torque calculation unit checks stability of the respective joint units (operation 420). In more detail, the control torque calculation unit compares sensed angles and angular velocities of the respective joint units with the target trajectories, and judges whether or not there is any joint unit having a sensed angle and angular velocity deviating from the corresponding target trajectory. For example, if it is judged that the sensed angles and angular velocities of the knee joint units and the ankle joint units are present in the target trajectories but the current angles and angular velocities of the hip joint units deviate from the target trajectories, the control calculation unit recognizes that the hip joint units are unstable.

With reference to FIG. 7, coordinates of the angle and angular velocity of a joint unit in the current state must be set to ($\theta$d, $\theta$'d) within a target trajectory, but coordinates of the measured angle and angular velocity of the joint unit are ($\theta$c, $\theta$'c). Therefore, the control torque calculation unit recognizes that the joint unit is unstable, and calculates control angle and angular velocity to trace the target trajectory of the joint unit.

The control torque calculation unit calculates the control angles and angular velocities of the joint units to trace the target trajectories per control cycle (operation 430). The control cycle may be 1 ms, and the control angles and angular velocities of the joint units are calculated per 1 ms. Here, the control cycle may be modified by a designer, and modification of the control cycle may be possible.

The control torque calculation unit calculates coordinates ($\theta$d,n, $\theta$'d,n) of control angle and angular velocity of the joint unit per control cycle so as to achieve a transition from the coordinates ($\theta$c, $\theta$'c) of the sensed angle and angular velocity to the coordinates ($\theta$df, $\theta$'df) of the final target angle and angular velocity within the target trajectory.

A method of calculating the coordinates ($\theta$d,n, $\theta$'d,n) of control angle and angular velocity of the joint unit is represented by Expression 1 and Expression 2.

[Expression 1]

$$\theta_{d,n} = \theta_{d,n-1} + \Delta\theta / \Delta t, \quad \Delta\theta = \theta_c - \theta_d$$

[Expression 2]

$$\theta'_{d,n} = \theta'_{d,n-1} + \Delta\theta' / \Delta t \ , \ \Delta\theta' = \theta'_c - \theta'_d$$

With reference to Expression 1 and Expression 2, the control angle and angular velocity θ d,n and θ'd,n of the joint unit are calculated by adding control angle and angular velocity per unit time, obtained by dividing Δθ and Δθ'by the control cycle Δt, to the current angle and angular velocity θd,n-1 and θ'd,n-1 per control cycle.

When the control angles and angular velocities of the respective joint units are calculated in such a manner (operation 430), the control torque calculation unit calculates control torques using the control angles and angular velocities (operation 440). The control torques are calculated through Expression 3.

[Expression 3]

$$\tau_A = k_{p,i}\left(\theta_{d,n} - \theta_{d,n-1}\right) + k_{d,1}\left(\theta'_{d,n} - \theta'_{d,n-1}\right)$$

In Expression 3, $\tau_A$ is a torque value per control cycle, θd,n and θ'd,n are control angle and angular velocity per control cycle, and θd,n-1 and θ'd,n-1 are current angle and angular velocity per control cycle. Further, kp, i and kd,i are coefficients. Here, i is an integer assigned to each joint unit, and the control torque of each joint unit is calculated.

When the control torque calculation unit calculates the control torques (operation 440), the servo control unit supplies the control torques to the corresponding joint units (operation 450) and then drives actuators, such as motors, installed on the joint units, thereby allowing the robot to achieve stable walking along the target trajectories while maintaining balance.

The torque-based FSM control method controls walking of the robot depending on the respective operating states defined in advance, and thus when one walking motion of the robot transitions to another walking motion, the simple transition between the operating states of the robot may cause the robot to achieve an unnatural motion or to lose balance.

Therefore, in a walking control method of a robot in accordance with another embodiment, when one walking motion of the robot transitions to another walking motion, transition states are defined and are controlled so as to perform a transition motion to naturally connect the two types of motions.

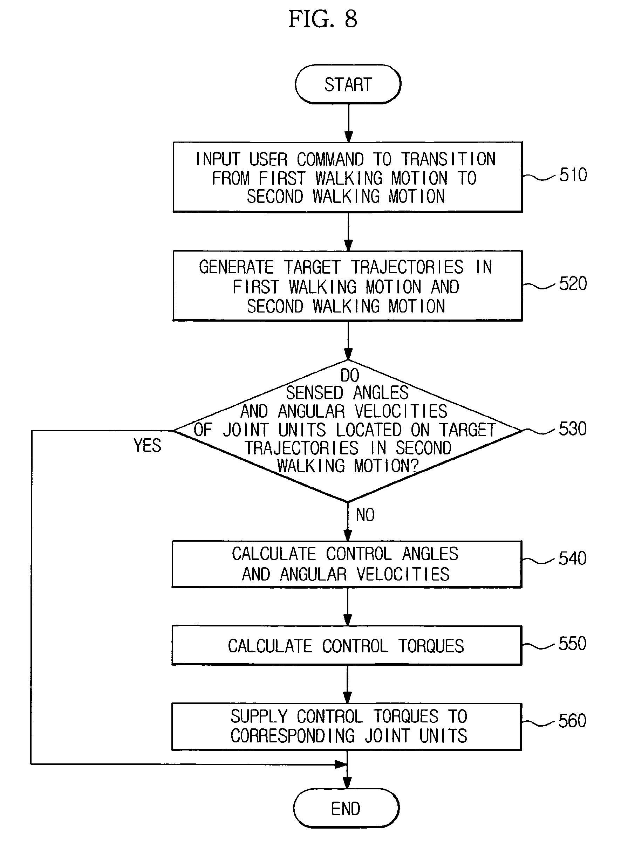

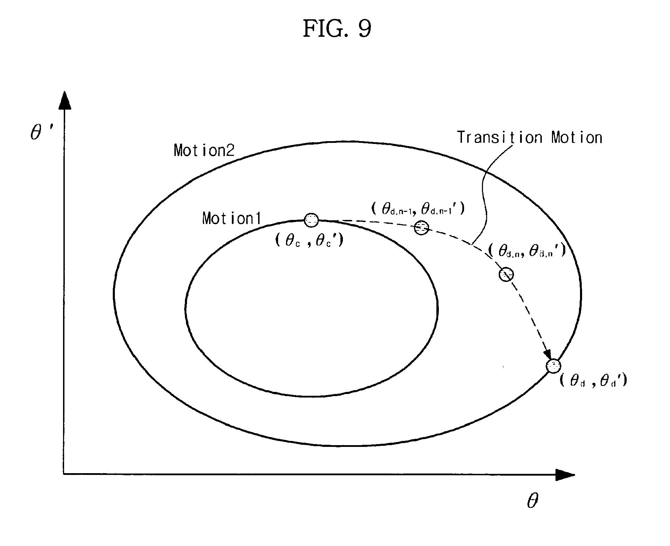

FIG. 8 is a flow chart illustrating the walking control method of the robot in accordance with this embodiment, and FIG. 9 is a graph illustrating generation of a transition motion based on the walking control method of the robot FIG. 8.

First, a user command to transition from the first walking motion to the second walking motion is input through the user interface unit (operation 510). Different types of walking motions are set based on walking velocities and walking strides.

When the user command to transition from the first walking motion to the second walking motion is input (operation 510), the target trajectory generation unit generates target trajectories of respective joint units using angles and angular velocities of the respective joint units during stable walking of the robot in the first walking motion and the second walking motion (operation 520). That is, the target trajectory generation unit generates the target trajectories of the respective joint units in the first walking motion and the second walking motion.

When the target trajectories are generated (operation 520), the control torque calculation unit calculates control torques to perform a transition from the first walking motion to the second walking motion (operation 550). The control torques are calculated so as to trace the target trajectories in the second walking motion from the target trajectories in the first walking motion.

Now, calculation of the control torques will be described in more detail. First, the control torque calculation unit judges whether or not sensed angles and angular velocities of the respective joint units are located on the target trajectories in the second walking motion (operation 530). If it is judged that the sensed angles and angular velocities of the joint units are not located on the target trajectories in the second walking motion, the control torque calculation unit calculates control torques to trace the target trajectories in the second walking motion (operation 550).

With reference to FIG. 9, coordinates of angle and angular velocity of a joint unit at a point of time when the user command to transition from the first walking motion to the second walking motion is input are (θc, θ'c) in the first walking motion. Therefore, the control torque calculation unit calculates control angle and angular velocity θd,n and θ'd,n of each joint unit per control unit so as to locate the sensed angle and angular velocity of each joint unit at the final target angle and angular velocity θd and θ'd located in the target trajectory in the second walking motion (operation 540). Further, the control torque calculation unit calculates control torques using the calculated control angles and angular velocities (operation 550).

Such calculation of the control torques (operation 550) is performed until the sensed angles and angular velocities of the respective joint units at a point of time when the robot performs the second walking motion are located on the target trajectories in the second walking motion (operation 530).

Calculation of the control angles and angular velocities and calculation of the control torques are carried out through above-described Expression 1 to Expression 3 with reference to FIG. 6, and thus a detailed description thereof will be omitted.

When the control torque calculation unit calculates the control torques in this manner, the servo control unit supplies the control torques to the corresponding joint units (operation 560) and then drives actuators, such as motors, installed on the joint units, thereby allowing the robot to perform the transition motion to naturally achieve the transition between the walking motions.

As is apparent from the above description, a walking robot and a control method thereof in accordance with one embodiment control torques of joint units using a FSM without solving the complicated dynamic equation, thereby achieving stable walking of the robot.

Further, simple calculation of control torques is carried out using angles and angular velocities of respective joint units during stable walking, which are defined in advance. Such calculation of the control torques using the angles and angular velocities of the respective joint units allows the robot to maintain balance and to achieve a natural motion transition without performing complicated calculation.

The embodiments can be implemented in computing hardware (computing apparatus) and/or software, such as (in a non-limiting example) any computer that can store, retrieve, process and/or output data and/or communicate with other computers. The results produced can be displayed on a display of the computing hardware. A program/software implementing the embodiments may be recorded on non-transitory computer-readable media comprising computer-readable recording media. Examples of the computer-readable recording media include a magnetic recording apparatus, an optical disk, a magneto-optical disk, and/or a semiconductor memory (for example, RAM, ROM, etc.). Examples of the magnetic recording apparatus include a hard disk device (HDD), a flexible disk (FD), and a magnetic tape (MT). Examples of the optical disk include a DVD (Digital Versatile Disc), a DVD-RAM, a CD-ROM (Compact Disc - Read Only Memory), and a CD-R (Recordable)/RW.

Further, according to an aspect of the embodiments, any combinations of the described features, functions and/or operations can be provided.

**Claims**

1. A walking robot (100) comprising:

   at least one joint unit (350) provided on each leg of the robot;
   a sensing unit (320) to sense angle and angular velocity of the at least one joint unit;
   a memory unit (330) to store data of the angle and angular velocity of the at least one joint unit during stable walking;
   a target trajectory generation (341) unit to generate a target trajectory using the data of the angle and angular velocity stored in the memory unit;
   a control torque calculation unit (342) to check stability of the at least one joint unit by comparing the sensed angle and angular velocity of the at least one joint unit with the generated target trajectory, and, if an unstable joint unit is present, to calculate a control torque of the unstable joint unit to trace the generated target trajectory; and
   a servo control unit (343) to transmit the calculated control torque to the unstable joint unit so as to control walking of the robot.

2. The walking robot according to claim 1, wherein the control torque calculation unit checks the stability of the at least one joint unit based on whether or not the sensed angle and angular velocity fall within the target trajectory.

3. The walking robot according to claim 1, wherein the control torque calculation unit calculates control angle and angular velocity of the unstable joint unit to trace the generated target trajectory, and calculates the control torque using the calculated control angle and angular velocity.

4. The walking robot according to claim 1, wherein:

   the at least one joint unit includes a hip joint unit (210), a knee joint unit (220), and an ankle joint unit (230) to move a thigh of each leg of the robot; and
   the target trajectory generation unit generates target trajectories of the hip joint unit, the knee joint unit, and the ankle joint unit of each leg.

5. A control method of a walking robot (100), which has at least one joint unit (350) provided on each leg of the robot, a sensing unit (320) to sense angle and angular velocity of the at least one joint unit, and a memory unit (330) to store data of the angle and angular velocity of the at least one joint unit during stable walking, said control method comprising:

   generating (410) a target trajectory using the data of the angle and angular velocity stored in the memory unit;
   checking stability (420) of the at least one joint unit by comparing the sensed angle and angular velocity of the at least one joint unit with the generated target trajectory;
   if an unstable joint unit is present as a result of the checking of the stability of the at least one joint unit, calculating (440) a control torque of the unstable joint unit to trace the target trajectory; and
   transmitting (450) the calculated control torque to the unstable joint unit so as to control walking of the robot.

**6.** The control method according to claim 5, wherein the stability of the at least one joint unit is checked based on whether or not the sensed angle and angular velocity fall within the target trajectory.

**7.** The control method according to claim 6, wherein the calculation of the control torque includes:

calculating (430) control angle and angular velocity to trace the target trajectory by comparing the sensed angle and angular velocity with the target trajectory; and
calculating the control torque using the calculated control angle and angular velocity.

**8.** The control method according to claim 5, wherein:

the at least one joint unit includes a hip joint unit, a knee joint unit, and an ankle joint unit to move a thigh of each leg of the robot; and
the target trajectory of each of the hip joint unit, the knee joint unit, and the ankle joint unit of each leg is generated.

**9.** A walking robot according to claim 1, further comprising:

a user interface unit (310) through which a user inputs a robot walking transition command from a first walking motion to a second walking motion;
the memory unit (330) to store data of the angle and angular velocity of the at least one joint unit in the first walking motion and the second walking motion;
the control torque calculation unit (342) to calculate a control torque to trace the generated target trajectory in the second walking.motion from the generated target trajectory in the first walking motion, if the robot walking transition command is input by the user.

**10.** The walking robot according to claim 9, wherein the control torque calculation unit calculates the control torque until the sensed angle and angular velocity of the at least one joint unit fall within the generated target trajectory in the second walking motion.

**11.** The walking robot according to claim 9, wherein the control torque calculation unit calculates control angle and angular velocity of the at least one joint unit by comparing the sensed angle and angular velocity of the at least one joint unit with the generated target trajectory in the second walking motion, and calculates the control torque using the calculated control angle and angular velocity.

**12.** The control method of a walking robot according to claim 5, which has a user interface unit through which a user inputs a robot walking transition command from first walking motion to second walking motion, the memory unit to store data of the angle and angular velocity of the at least one joint unit in the first walking motion and the second walking motion, said control method comprising:

generating target trajectories (510) using the data of the angle and angular velocity in the first walking motion and the second walking motion, stored in the memory unit;
calculating (550) a control torque to trace the generated target trajectory in the second walking motion from the generated target trajectory in the first walking motion, if the robot walking transition command is input by the user.

**13.** The control method according to claim 12, wherein the control torque is calculated until the sensed angle and angular velocity of the at least one joint unit fall within the generated target trajectory in the second walking motion.

**14.** The control method according to claim 12, wherein the calculation of the control torque includes calculating (540) control angle and angular velocity of the at least one joint unit by comparing the sensed angle and angular velocity of the at least one joint unit with the generated target trajectory in the second walking motion, and calculating the control torque using the calculated control angle and angular velocity.

**Patentansprüche**

**1.** Schreitroboter (100), umfassend:

zumindest eine Gelenkeinheit (350), vorgesehen auf jedem Bein des Roboters;
eine Wahrnehmungseinheit (320) zum Wahrnehmen von Winkel und Winkelgeschwindigkeit der zumindest einen Gelenkeinheit;
eine Speichereinheit (330) zum Speichern von Daten des Winkels und der Winkelgeschwindigkeit der zumindest einen Gelenkeinheit während stabilen Schreitens;
eine Zieltrajektorien-Erzeugungseinheit (341) zum Erzeugen einer Zieltrajektorie unter Verwendung der in der Speichereinheit gespeicherten Daten des Winkels und der Winkelgeschwindigkeit;
eine Steuerdrehmoment-Berechnungseinheit (342) zum Überprüfen der Stabilität der zumindest einen Gelenkeinheit durch Vergleichen des wahrgenommenen Winkels und der wahrgenommenen Winkelgeschwindigkeit der zumindest einen Gelenkeinheit mit der erzeugten Zieltrajektorie, und falls eine instabile Gelenkeinheit vorliegt, zum Berechnen eines Steuerdrehmoments für die instabile Gelenkeinheit zwecks Verfolgung der erzeugten Zieltrajektorie; und eine Servosteuereinheit (343) zum Übertragen des berechneten Steuerdrehmoments an die instabile Gelenkeinheit zwecks Steuerung des Schreitens des Roboters.

2. Schreitroboter nach Anspruch 1, wobei die Steuerdrehmoment-Berechnungseinheit die Stabilität der zumindest einen Gelenkeinheit auf Grundlage dessen überprüft, ob der wahrgenommene Winkel und die wahrgenommene Winkelgeschwindigkeit in die Zieltrajektorie fallen oder nicht.

3. Schreitroboter nach Anspruch 1, wobei die Steuerdrehmoment-Berechnungseinheit Steuerwinkel und Steuerwinkelgeschwindigkeit für die instabile Gelenkeinheit berechnet zwecks Verfolgung der erzeugten Zieltrajektorie, und das Steuerdrehmoment unter Verwendung des berechneten Steuerwinkels und der berechneten Steuerwinkelgeschwindigkeit berechnet.

4. Schreitroboter nach Anspruch 1, wobei:

die zumindest eine Gelenkeinheit eine Hüftgelenkeinheit (210), eine Kniegelenkeinheit (220) und eine Fußgelenkeinheit (230) beinhaltet, um einen Schenkel bzw. Oberschenkel jedes Beins des Roboters zu bewegen; und die Zieltrajektorien-Erzeugungseinheit Zieltrajektorien der Hüftgelenkeinheit, der Kniegelenkeinheit und der Fußgelenkeinheit jedes Beins erzeugt.

5. Steuerverfahren für einen Schreitroboter (100), der zumindest eine Gelenkeinheit (350), vorgesehen auf jedem Bein des Roboters, eine Wahrnehmungseinheit (320) zum Wahrnehmen von Winkel und Winkelgeschwindigkeit der zumindest einen Gelenkeinheit, und eine Speichereinheit (330) zum Speichern von Daten des Winkels und der Winkelgeschwindigkeit der zumindest einen Gelenkeinheit während stabilen Schreitens aufweist, wobei das Steuerverfahren umfasst:

Erzeugen (410) einer Zieltrajektorie unter Verwendung der in der Speichereinheit gespeicherten Daten des Winkels und der Winkelgeschwindigkeit; Überprüfen der Stabilität (420) der zumindest einen Gelenkeinheit durch Vergleichen des wahrgenommenen Winkels und der wahrgenommenen Winkelgeschwindigkeit der zumindest einen Gelenkeinheit mit der erzeugten Zieltrajektorie;

falls als Ergebnis des Überprüfens der Stabilität der zumindest einen Gelenkeinheit eine instabile Gelenkeinheit vorliegt, Berechnen (440) eines Steuerdrehmoments für die instabile Gelenkeinheit zwecks Verfolgung der Zieltrajektorie; und Übertragen (450) des berechneten Steuerdrehmoments an die instabile Gelenkeinheit zwecks Steuerung des Schreitens des Roboters.

6. Steuerverfahren nach Anspruch 5, wobei die Stabilität der zumindest einen Gelenkeinheit überprüft wird auf Grundlage dessen, ob der wahrgenommene Winkel und die wahrgenommene Winkelgeschwindigkeit in die Zieltrajektorie fallen oder nicht.

7. Steuerverfahren nach Anspruch 6, wobei die Berechnung des Steuerdrehmoments einschließt:

Berechnen (430) von Steuerwinkel und Steuerwinkelgeschwindigkeit, zwecks Verfolgung der Zieltrajektorie, durch Vergleichen des wahrgenommenen Winkels und der wahrgenommenen Winkelgeschwindigkeit mit der Zieltrajektorie; und Berechnen des Steuerdrehmoments unter Verwendung des berechneten Steuerwinkels und der berechneten Steuerwinkelgeschwindigkeit.

8. Steuerverfahren nach Anspruch 5, wobei:

die zumindest eine Gelenkeinheit eine Hüftgelenkeinheit, eine Kniegelenkeinheit und eine Fußgelenkeinheit beinhaltet, um einen Schenkel bzw. Oberschenkel jedes Beins des Roboters zu bewegen; und die Zieltrajektorie von jeweils der Hüftgelenkeinheit, der Kniegelenkeinheit und der Fußgelenkeinheit jedes Beins erzeugt wird.

9. Schreitroboter nach Anspruch 1, der weiterhin umfasst:

eine Benutzerschnittstelleneinheit (310), durch die ein Benutzer einen Roboterschreitübergangsbefehl von einer ersten Schreitbewegung zu einer zweiten Schreitbewegung eingibt; die Speichereinheit (330) zum Speichern von Daten des Winkels und der Winkelgeschwindigkeit der zumindest einen Gelenkeinheit in der ersten Schreitbewegung und der zweiten Schreitbewegung; die Steuerdrehmoment-Berechnungseinheit (342) zum Berechnen eines Steuerdrehmoments zwecks Verfolgung der erzeugten Zieltrajektorie in der zweiten Schreitbewegung ausgehend von der erzeugten Zieltrajektorie in der ersten Schreitbewegung, falls der Roboterschreitübergangsbefehl vom Benutzer eingegeben wird.

10. Schreitroboter nach Anspruch 9, wobei die Steuerdrehmoment-Berechnungseinheit das Steuerdrehmoment berechnet, bis der wahrgenommene Winkel und die wahrgenommene Winkelgeschwindigkeit der zumindest einen Gelenkeinheit in die erzeugte Zieltrajektorie in der zweiten Schreitbewegung fallen.

11. Schreitroboter nach Anspruch 9, wobei die Steuerdrehmoment-Berechnungseinheit Steuerwinkel und Steuerwinkelgeschwindigkeit für die zumindest eine Gelenkeinheit berechnet durch Vergleichen des wahrgenommenen Winkels und der wahrgenommenen Winkelgeschwindigkeit der zumindest einen Gelenkeinheit mit der erzeugten Zieltrajektorie in der zweiten Schreitbewegung, und das Steuerdrehmoment unter Verwendung des berechneten Steuerwinkels und der berechneten Steuerwinkelgeschwindigkeit berechnet.

12. Steuerverfahren für einen Schreitroboter nach Anspruch 5, der eine Benutzerschnittstelleneinheit aufweist, durch die ein Benutzer einen Roboterschreitübergangsbefehl von einer ersten Schreitbewegung zu einer zweiten Schreitbewegung eingibt, und die Speichereinheit zum Speichern von Daten des Winkels und der Winkelgeschwindigkeit der zumindest einen Gelenkeinheit in der ersten Schreitbewegung und der zweiten Schreitbewegung, wobei das Steuerverfahren umfasst:

Erzeugen von Zieltrajektorien (510) unter Verwendung der Daten des Winkels und der Winkelgeschwindigkeit in der ersten Schreitbewegung und der zweiten Schreitbewegung, gespeichert in der Speichereinheit; Berechnen (550) eines Steuerdrehmoments zwecks Verfolgung der erzeugten Zieltrajektorie in der zweiten Schreitbewegung ausgehend von der erzeugten Zieltrajektorie in der ersten Schreitbewegung, falls der Roboterschreitübergangsbefehl vom Benutzer eingegeben wird.

13. Steuerverfahren nach Anspruch 12, wobei das Steuerdrehmoment berechnet wird, bis der wahrgenommene Winkel und die wahrgenommene Winkelgeschwindigkeit der zumindest einen Gelenkeinheit in die erzeugte Zieltrajektorie in der zweiten Schreitbewegung fallen.

14. Steuerverfahren nach Anspruch 12, wobei die Berechnung des Steuerdrehmoments Berechnen (540) von Steuerwinkel und Steuerwinkelgeschwindigkeit für die zumindest eine Gelenkeinheit durch Vergleichen des wahrgenommenen Winkels und der wahrgenommenen Winkelgeschwindigkeit der zumindest einen Gelenkeinheit mit der erzeugten Zieltrajektorie in der zweiten Schreitbewegung, und Berechnen des Steuerdrehmoments unter Verwendung des berechneten Steuerwinkels und der berechneten Steuerwinkelgeschwindigkeit einschließt.

## Revendications

1. Robot marcheur (100) comprenant :

au moins une unité d'articulation (350) prévue sur chaque jambe du robot ; une unité de détection (320) destinée à détecter l'angle et la vitesse angulaire de l'au moins une unité d'articulation ; une unité de mémorisation (330) destinée à stocker des données relatives à l'angle et à la vitesse angulaire de l'au moins une unité d'articulation au cours d'une marche stable ; une unité de génération de trajectoire cible (341) destinée à générer une trajectoire cible au moyen des données relatives à l'angle et à la vitesse angulaire stockées dans l'unité de mémorisation ; une unité de calcul de couple de commande (342) destinée à vérifier la stabilité de l'au moins une unité d'articulation en comparant l'angle et la vitesse angulaire détectés de l'au moins une unité d'articulation à la trajectoire cible générée, et, si une unité d'articulation instable est présente, à calculer un couple de commande de l'unité d'articulation instable pour tracer la trajectoire cible générée ; et une unité de servocommande (343) destinée à transmettre le couple de commande calculé à l'unité d'articulation instable de manière à commander la marche du robot.

2. Robot marcheur selon la revendication 1, dans lequel l'unité de calcul de couple de commande vérifie la stabilité de l'au moins une unité d'articulation en fonction du fait que l'angle et la vitesse angulaire détectés se situent ou non dans la trajectoire cible.

3. Robot marcheur selon la revendication 1, dans lequel l'unité de calcul de couple de commande calcule l'angle de commande et la vitesse angulaire de l'unité d'articulation instable pour tracer la trajectoire cible générée, et calcule le couple de commande au moyen de l'angle de commande et de la vitesse angulaire calculés.

4. Robot marcheur selon la revendication 1, dans lequel :

l'au moins une unité d'articulation comporte une unité d'articulation de la hanche (210), une unité d'articulation du genou (220), et une unité d'articulation de la cheville (230) permettant de faire bouger la cuisse de chaque jambe du robot ; et l'unité de génération de trajectoire cible génère des trajectoires cibles de l'unité d'articulation de la hanche, de l'unité d'articulation du genou et de l'unité d'articulation de la cheville de chaque jambe.

5. Procédé de commande d'un robot marcheur (100), qui présente au moins une unité d'articulation (350) prévue sur chaque jambe du robot, une unité de détection (320) destinée à détecter l'angle et la vitesse angulaire de l'au moins une unité d'articulation, et une unité de mémorisation (330) destinée à stocker des données relatives à l'angle et à la vitesse angulaire de l'au moins une unité d'articulation au cours d'une marche stable, ledit procédé de commande comprenant :

la génération (410) d'une trajectoire cible au moyen des données relatives à l'angle et à la vitesse angulaire stockées dans l'unité de mémorisation ; la vérification de la stabilité (420) de l'au moins une unité d'articulation en comparant l'angle et la vitesse angulaire détectés de l'au moins une unité d'articulation à la trajectoire cible générée ; si une unité d'articulation instable est présente en résultat de la vérification de la stabilité de l'au moins une unité d'articulation, le calcul (440) d'un couple de commande de l'unité d'articulation instable pour tracer la trajectoire cible ; et la transmission (450) du couple de commande calculé auprès de l'unité d'articulation instable de manière à commander la marche du robot.

6. Procédé de commande selon la revendication 5, dans lequel la stabilité de l'au moins une unité d'articulation est vérifiée en fonction du fait que l'angle et la vitesse angulaire détectés se situent ou non dans la trajectoire cible.

7. Procédé de commande selon la revendication 6, dans lequel le calcul du couple de commande comporte :

le calcul (430) de l'angle de commande et de la vitesse angulaire pour tracer la trajectoire cible en comparant l'angle et la vitesse angulaire détectés à la trajectoire cible ; et le calcul du couple de commande au moyen de l'angle de commande et de la vitesse angulaire calculés.

8. Procédé de commande selon la revendication 5, dans lequel :

l'au moins une unité d'articulation comporte une unité d'articulation de la hanche, une unité d'articulation du genou, et une unité d'articulation de la cheville permettant de faire bouger la cuisse de chaque jambe du robot ; et la trajectoire cible de l'unité d'articulation de la hanche, de l'unité d'articulation du genou et de l'unité d'articulation de la cheville de chaque jambe est générée.

9. Robot marcheur selon la revendication 1, comprenant en outre :

une unité d'interface utilisateur (310) grâce à laquelle un utilisateur saisit une commande de transition de marche du robot, d'un premier mouvement de marche à un second mouvement de marche ; l'unité de mémorisation (330) destinée à stocker des données relatives à l'angle et à la vitesse angulaire de l'au moins une unité d'articulation dans le premier mouvement de marche et le second mouvement de marche ; l'unité de calcul de couple de commande (342) destinée à calculer un couple de commande pour tracer la trajectoire cible générée dans le second mouvement de marche à partir de la trajectoire cible générée dans le premier mouvement de marche, si la commande de transition de marche du robot a été saisie par l'utilisateur.

10. Robot marcheur selon la revendication 9, dans lequel l'unité de calcul de couple de commande calcule le couple de commande jusqu'à ce que l'angle et la vitesse angulaire détectés de l'au moins une unité d'articulation se situent dans la trajectoire cible générée dans le second mouvement de marche.

11. Robot marcheur selon la revendication 9, dans lequel l'unité de calcul de couple de commande calcule l'angle de commande et la vitesse angulaire de l'au moins une unité d'articulation en comparant l'angle et la vitesse angulaire détectés de l'au moins une unité d'articulation à la trajectoire cible générée dans le second mouvement de marche, et calcule le couple de commande au moyen de l'angle de commande et de la vitesse angulaire calculés.

12. Procédé de commande d'un robot marcheur selon la revendication 5, lequel présente une unité d'interface utilisateur grâce à laquelle un utilisateur saisit une commande de transition de marche du robot d'un premier mouvement de marche à un second mouvement de marche, l'unité de mémorisation destinée à stocker des données relatives à l'angle et à la vitesse angulaire de l'au moins une unité d'articulation dans le premier mouvement de marche et le second mouvement de marche, ledit procédé de commande comprenant :

la génération de trajectoires cibles (510) au moyen des données relatives à l'angle et à la vitesse angulaire dans le premier mouvement de marche et le second mouvement de marche, stockées dans l'unité de mémorisation ; et

le calcul (550) d'un couple de commande pour tracer la trajectoire cible générée dans le second mouvement de marche à partir de la trajectoire cible générée dans le premier mouvement de marche, si la commande de transition de marche du robot a été saisie par l'utilisateur.

13. Procédé de commande selon la revendication 12, dans lequel le couple de commande est calculé jusqu'à ce que l'angle et la vitesse angulaire détectés de l'au moins une unité d'articulation se situent dans la trajectoire cible générée dans le second mouvement de marche.

14. Procédé de commande selon la revendication 12, dans lequel le calcul du couple de commande comporte le calcul (540) de l'angle de commande et de la vitesse angulaire de l'au moins une unité d'articulation en comparant l'angle et la vitesse angulaire détectés de l'au moins une unité d'articulation à la trajectoire cible générée dans le second mouvement de marche, et le calcul du couple de commande au moyen de l'angle de commande et de la vitesse angulaire calculés.

FIG. 1

# FIG. 2

FIG. 3

FIG. 4

310 — USER INTERFACE UNIT

340

341 — TARGET TRAJECTORY GENERATION UNIT

MEMORY UNIT — 330

320 — SENSING UNIT

342 — TARGET TORQUE CALCULATION UNIT

343 — SERVO CONTROL UNIT

JOINT UNIT — 350

FIG. 5A

FIG. 5B

FIG. 5C

# FIG. 6

```
          ┌─────────┐
          │  START  │
          └─────────┘
               │
               ▼
  ┌───────────────────────────┐
  │ GENERATE TARGET TRAJECTORIES│ ──── 410
  │   DURING STABLE WALKING     │
  └───────────────────────────┘
               │
               ▼
         ◇───────────────◇
   NO   ╱ ARE UNSTABLE JOINT ╲ ──── 420
  ◀─────  UNITS PRESENT?      
         ╲───────────────╱
               │ YES
               ▼
  ┌───────────────────────────┐
  │ CALCULATE CONTROL ANGLES AND│ ──── 430
  │ ANGULAR VELOCITIES TO TRACE │
  │     TARGET TRAJECTORIES     │
  └───────────────────────────┘
               │
               ▼
  ┌───────────────────────────┐
  │   CALCULATE CONTROL TORQUES │ ──── 440
  └───────────────────────────┘
               │
               ▼
  ┌───────────────────────────┐
  │  SUPPLY CONTROL TORQUES TO  │ ──── 450
  │ CORRESPONDING JOINT UNITS   │
  └───────────────────────────┘
               │
               ▼
          ┌─────────┐
          │   END   │
          └─────────┘
```

FIG. 7

$( \theta_c , \theta_c')$

$( \theta_{d,n-1}, \theta_{d,n-1}' )$

$( \theta_{d,n}, \theta_{d,n}' )$

$( \theta_d , \theta_d')$

$( \theta_{df} , \theta_{df}')$

FIG. 8

```
        ( START )
            |
            v
+----------------------------------+
|   INPUT USER COMMAND TO TRANSITION|  ~510
|   FROM FIRST WALKING MOTION TO    |
|   SECOND WALKING MOTION           |
+----------------------------------+
            |
            v
+----------------------------------+
|   GENERATE TARGET TRAJECTORIES IN |  ~520
|   FIRST WALKING MOTION AND        |
|   SECOND WALKING MOTION           |
+----------------------------------+
            |
            v
          /  DO  \
         / SENSED ANGLES \
        / AND ANGULAR VELOCITIES \    ~530
  YES  <  OF JOINT UNITS LOCATED ON TARGET >
        \ TRAJECTORIES IN SECOND /
         \ WALKING MOTION? /
            |
            | NO
            v
+----------------------------------+
|   CALCULATE CONTROL ANGLES        |  ~540
|   AND ANGULAR VELOCITIES          |
+----------------------------------+
            |
            v
+----------------------------------+
|   CALCULATE CONTROL TORQUES       |  ~550
+----------------------------------+
            |
            v
+----------------------------------+
|   SUPPLY CONTROL TORQUES TO       |  ~560
|   CORRESPONDING JOINT UNITS       |
+----------------------------------+
            |
            v
        ( END )
```

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1642687 A